# EUROPÄISCHE PATENTANMELDUNG

(11) **EP 1 178 655 A2**
(43) Veröffentlichungstag der Anmeldung: **06.02.2002**
(21) Anmeldenummer: 01117574.2
(22) Anmeldetag: 20.07.2001
(51) Int. Cl.: H04M 3/42, H04M 7/00

(54) **Aktivierung und Deaktivierung von Leistungmerkmalen**

(30) Priorität: 03.08.2000 DE 10037989
(71) Anmelder: SIEMENS AKTIENGESELLSCHAFT, 80333 München (DE)
(72) Erfinder: Willmann, Michael, 58454 witten (DE)

(57) **Zusammenfassung**

Die vorliegende Erfindung betrifft eine Kommunikationsanlage (2) für ein - vorzugsweise privates - Kommunikationsnetz (1) mit mehreren untereinander vernetzten Kommunikationsanlagen (2, 3a,...,3c), wobei in den Kommunikationsanlagen (2, 3a,...,3c) mittels spezifischer Eingaben durch einen Teilnehmer Leistungsmerkmale für ein bestimmtes Endgerät (21, 31) aktiviert bzw. deaktiviert werden können. Hierzu weist die erfindungsgemäße Kommunikationsanlage (2)eine Erkennungseinrichtung (4) auf, die anhand der Eingaben automatisch erkennt, in welcher der Kommunikationsanlagen (2, 3a...3c) innerhalb des Kommunikationsnetzes (1) das jeweilige Leistungsmerkmal aktiviert bzw. deaktiviert werden soll.

Weiterhin betrifft die vorliegende Erfindung ein in dieser Kommunikationsanlage (2) angewendetes Verfahren zum Aktivieren bzw. Deaktivieren von Leistungsmerkmalen.

## Beschreibung

Die vorliegende Erfindung betrifft eine Kommunikationsanlage - insbesondere für ein privates Kommunikationsnetz - gemäß dem Oberbegriff des Patentanspruchs 1 und ein in dieser Kommunikationsanlage angewendetes Verfahren zum Aktivieren und Deaktivieren von Leistungsmerkmalen gemäß dem Oberbegriff des Patentanspruchs 7.

Aus der Produktschrift "Sonderausgabe telcom report und Siemens Magazin Com: ISDN im Büro - HICOM", Siemens AG, Berlin und München, 1985, insbesondere der Seiten 14 bis 31 ist eine für eine Informationsvermittlung, insbesondere Sprachdatenvermittlung ausgebildete Kommunikationsanlage bekannt, die eine Vielzahl von Leistungsmerkmalen, wie z.B. automatischer Rückruf, Anrufübernahme, Rufumleitung, usw., unterstützt. Des weiteren ist es aus der Produktschrift der Firma Siemens AG "HICOM 300 Networking", 1991, Bestellnummer A31001-W-A30 bekannt, Kommunikationsanlagen zu einem - in der Regel privaten - Kommunikationsnetz zusammenzuschalten und lokal an einer Kommunikationsanlage verfügbare Leistungsmerkmale netzweit zur Verfügung zu stellen. Eine netzweite Realisierung der Leistungsmerkmale erfolgt dabei üblicherweise mittels eines kommunikationsanlagen-spezifischen, auf einem zeitschlitz-orientierten Übertragungsprotokoll basierenden Vernetzungsprotokoll.

Jeder Teilnehmer eines Kommunikationssystems hat dabei die Möglichkeit Leistungsmerkmale, wie z.B. eine Anrufumleitung, netzweit zu aktivieren bzw. zu deaktivieren. Dabei wählt der Teilnehmer beispielsweise eine leistungsmerkmals-spezifische Servicekennzahl und die Rufnummer desjenigen Endgerätes, für welches das jeweilige Leistungsmerkmal zu aktivieren bzw. zu deaktivieren ist.

Die Aktivierung bzw. Deaktivierung der Leistungsmerkmale kann dabei von Endgeräten aus erfolgen, die an eine der Kommunikationsanlagen innerhalb des Kommunikationsnetzes angeschlossen sind. Weiterhin hat ein Teilnehmer die Möglichkeit, Leistungsmerkmale im Kommunikationsnetz von außerhalb des Kommunikationsnetzes, z.B. ausgehend von einem öffentlichen Kommunikationsnetz, mittels einer sogenannten DISA-Funktionalität (Direct Inward System Access) zu aktivieren bzw. zu deaktivieren.

Häufig tritt der Fall auf, daß ein Teilnehmer ein Leistungsmerkmal für ein Endgerät - bzw. für eine dem Endgerät zugeordnete Rufnummer - aktivieren bzw. deaktivieren möchte, daß sich der Teilnehmer aber gerade an einem Endgerät befindet, welches an einer anderen Kommunikationsanlage innerhalb des Kommunikationsnetzes angeschlossen ist, als das Endgerät, für welches das Leistungsmerkmal aktiviert bzw. deaktiviert werden soll. Beispielsweise ist dies der Fall, wenn sich der Teilnehmer nicht in seinem eigenen Büro befindet, sondern von einem anderen Endgerät aus für sein eigenes Endgerät bzw. seine eigene Rufnummer eine Anrufumleitung aktivieren bzw. deaktivieren möchte.

In Fällen, in denen ein Teilnehmer ein Leistungsmerkmal ausgehend von einer anderen Kommunikationsanlage aktivieren bzw. deaktivieren möchte, muß dieser Teilnehmer zusätzlich zu den genannten Eingaben zum Aktivieren bzw. Deaktivieren des jeweiligen Leistungsmerkmales eine Kennung (Präfix) derjenigen Telekommunikationsanlage eingeben, in der das Leistungsmerkmal für ein daran angeschlossenes Endgerät aktiviert bzw. deaktiviert werden soll.

Die manuelle Eingabe von Kennungen wirkt jedoch der gewünschten Strategie entgegen, daß sich das gesamte private Kommunikationsnetz für den Teilnehmer als eine Einheit darstellt. Der Teilnehmer muß sich beim Aktivieren bzw. Deaktivieren von Leistungsmerkmalen immer bewußt sein, ob er sich gerade über die Kommunikationsanlage "seines" Endgerätes (lokal) oder über eine andere Kommunikationsanlage (netzweit, remote) in das Kommunikationsnetz einwählt.

Der vorliegenden Erfindung liegt nun die Aufgabe zugrunde, eine Kommunikationsanlage und ein Verfahren zur Verfügung zu stellen, durch die eine kommunikationsanlagen-übergreifende Aktivierung von Leistungsmerkmalen komfortabler realisierbar ist.

Gelöst wird die Aufgabe ausgehend von den Merkmalen des Oberbegriffs des Patentanspruchs 1 bzw. des Patentanspruchs 7 durch deren kennzeichnende Merkmale.

Gemäß der vorliegenden Erfindung ermittelt eine Erkennungseinrichtung der erfindungsgemäßen Kommunikationsanlage, ob das jeweilige Leistungsmerkmal lokal - d. h. in der Kommunikationsanlage, über die sich der jeweilige Teilnehmer mit seinem Endgerät in das Telekommunikationsnetz einwählt - oder netzweit in einer anderen Kommunikationsanlage zu aktivieren bzw. zu deaktivieren ist. Entsprechend versendet die Erkennungseinrichtung Steuerinformationen an diejenige Kommunikationsanlage, in der das Leistungsmerkmal aktiviert bzw. deaktiviert werden soll.

Ein wesentlicher Vorteil der vorliegenden Erfindung besteht somit darin, daß der Teilnehmer keine Information mehr darüber benötigt, über welche Kommunikationsanlage innerhalb des Kommunikationsnetzes er sich gerade eingewählt hat, und in welcher Kommunikationsanlage das jeweilige Leistungsmerkmal für ein bestimmtes Endgerät zu aktivieren bzw. zu deaktivieren ist, d.h. der Teilnehmer benötigt keine Information mehr über die den einzelnen Kommunikationsanlagen des Kommunikationsnetzes zugeordneten Kennungen (Präfixe). Die Eingabe für die Aktivierung bzw. Deaktivierung der jeweiligen Leistungsmerkmale ist somit netzweit einheitlich, unabhängig davon, über und für welches Endgerät die Leistungsmerkmale aktiviert bzw. deaktiviert werden sollen.

Vorteilhafte Ausgestaltungen der vorliegenden Erfindung sind in den jeweiligen Unteransprüchen wiedergegeben.

Ein Leistungsmerkmal wird dabei durch die Eingabe einer leistungsmerkmals-spezifischen Servicekennzahl und der Rufnummer desjenigen Endgerätes, für welches das Leistungsmerkmal aktiviert bzw. deaktiviert werden soll, aktiviert bzw. deaktiviert. Die Erkennungsvorrichtung erkennt erfindungsgemäß anhand der eingegebenen Rufnummer automatisch, an welcher Kommunikationsanlage das entsprechende Endgerät angeschlossen - bzw. welcher Kommunikationsanlage eine Rufnummer zugeordnet - ist und damit in welcher Kommunikationsanlage das Leistungsmerkmal aktiviert bzw. deaktiviert werden soll.

In Fällen, in denen ein Leistungsmerkmal in einer anderen Kommunikationsanlage aktiviert bzw. deaktiviert werden soll, als in der Kommunikationsanlage, über welche die Eingabe erfolgt ist, fügt die Erkennungseinrichtung automatisch eine Kennung der jeweiligen Kommunikationsanlage, in der das Leistungsmerkmal aktiviert bzw. deaktiviert werden soll, zu der Eingabe hinzu.

Die Erkennungsvorrichtung greift zur Erkennung auf eine Speichervorrichtung zu, in der permanent die Rufnummern der an den jeweiligen Kommunikationsanlagen angeschlossenen Endgeräte und den Rufnummern zugeordnet die entsprechende Kennung der jeweiligen Kommunikationsanlage abgespeichert sind.

In modernen Kommunikationssystemen sind die einzelnen Kommunikationsanlagen zunehmend über Rechnernetze, z.B. ein lokales Netzwerk LAN, miteinander vernetzt, wobei eine Datenübertragung mittels des paket-orientierten IP-Protokolles (Internet Protocol) erfolgt.

Die für eine Realisierung der Leistungsmerkmale notwendige Signalisierung zwischen den Kommunikationsanlagen erfolgt dabei erfindungsgemäß über IP-getunnelte Signalisierungsmeldungen. Die Signalisierungsmeldungen basieren üblicherweise auf einem kommunikationsanlagen-spezifischen, auf einem zeitschlitz-orientierten Übertragungsprotokoll basierenden Vernetzungsprotokoll, wobei die Signalisierungsmeldungen für die Vernetzung der Kommunikationsanlagen in IP-Meldungen verpackt und über das Netzwerk (LAN) an den jeweiligen Empfänger (Kommunikationsanlage) versendet werden.

Die vorliegende Erfindung wird nachfolgend anhand eines bevorzugten Ausführungsbeispiels unter Bezug auf die beigefügte Zeichnung näher erläutert.

Dabei zeigt:

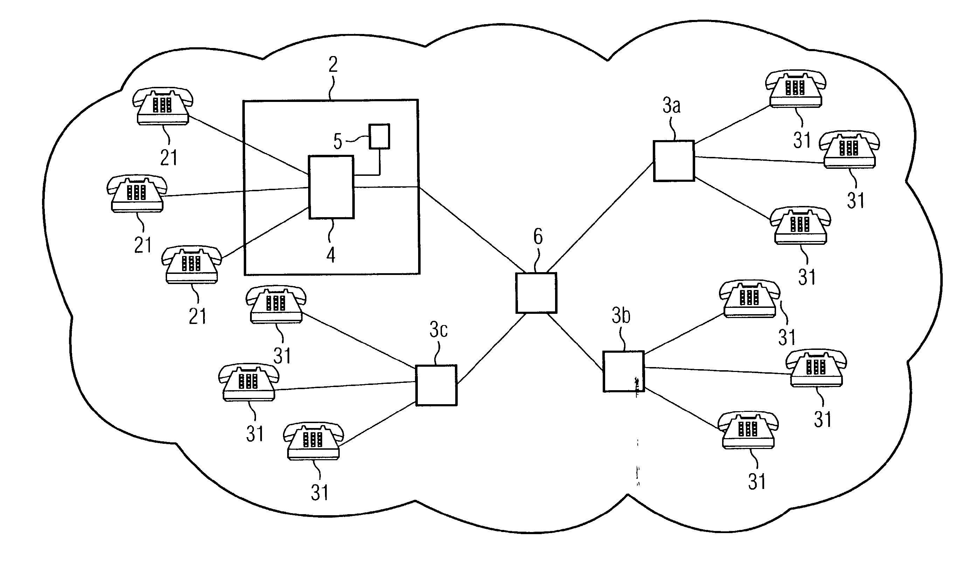

- Fig. 1:: ein Strukturbild zur schematischen Darstellung eines - vorzugsweise privaten - Kommunikationsnetzes mit einer erfindungsgemäßen Kommunikationsanlage.

Fig. 1 zeigt ein Strukturbild eines Kommunikationsnetzes 1, wobei die im Kommunikationsnetz 1 angeordneten Kommunikationsanlagen 2, 3a,...,3c - bzw. die Netzknoten des Kommunikationsnetzes 1- sternförmig miteinander vernetzt sind. Im Zentrum des sternförmigen Kommunikationsnetzes 1 ist ein zentraler Server 6 angeordnet, über den die Ablaufsteuerung der angeschlossenen Telekommunikationsanlagen 2, 3a, ..., 3c realisiert wird. Als Vernetzungsstruktur kann alternativ auch eine beliebige andere Vernetzungsstruktur, z.B. eine Busstruktur, gewählt werden.

Die Figur zeigt eine erfindungsgemäße Kommunikationsanlage 2 mit daran angeschlossenen Endgeräten 21 und weitere über den zentralen Server 6 mit der erfindungsgemäßen Kommunikationsanlage 2 verbundene Kommunikationsanlagen 3a, ..., 3c mit daran angeschlossen Endgeräten 31. Die Endgeräte 21, 31 können dabei herkömmliche schnurgebundene oder schnurlose Kommunikationsendgeräte aber auch Datenverarbeitungseinrichtungen, wie z.B. ein Personal Computer, sein.

Anhand des bekannten Leistungsmerkmales "Anrufumleitung" wird die Funktionsweise der erfindungsgemäßen Kommunikationsanlage 2 nachfolgend beispielhaft erläutert:

Ein Teilnehmer möchte für ein an der weiteren Kommunikationsanlage 3a angeschlossenes Endgerät 31 eine Anrufumleitung zu einem beliebigen Endgerät 21, 31 einrichten. Die Rufumleitung soll dabei durch Aktivierung mittels eines an der Kommunikationsanlage 2 angeschlossenen Endgerätes 21 erfolgen.

Beim Stand der Technik müßte der Teilnehmer dazu die Servicekennung des jeweiligen Leistungsmerkmales, die Rufnummer des Endgerätes 31, für das die Anrufumleitung eingerichtet werden soll und die Kennung der weiteren Kommunikationsanlage 3a, an der das Endgerät 31 angeschlossen ist, eingeben. Bei einer Aktivierung der Anrufumleitung innerhalb derselben Kommunikationsanlage 2 kann dahingegen die Eingabe der Kennung entfallen.

Gemäß der vorliegenden Erfindung entfällt nun für einen Teilnehmer in jedem Fall die Eingabe der die weitere Kommunikationsanlage 3a identifizierenden Kennung. Ein Teilnehmer benötigt für eine Aktivierung bzw. Deaktivierung von Leistungsmerkmalen somit keine Informationen mehr über die Struktur des Kommunikationsnetzes 1 bzw. über die den Kommunikationsanlagen 2, 3a,...,3c des Kommunikationsnetzes 1 zugeordneten Kennungen.

Die erfindungsgemäße Kommunikationsanlage 2 weist hierzu eine Erkennungseinrichtung 4 auf, die mittels eines Wahlbewertungsalgorithmus die Eingabe des Teilnehmers zur Aktivierung bzw. Deaktivierung eines Leistungsmerkmales bewertet. Die Erkennungseinrichtung 4 ermittelt dabei, ob das Endgerät 31, dessen Rufnummer für eine Aktivierung bzw. Deaktivierung des jeweiligen Leistungsmerkmals eingegeben wurde, an die gleiche Kommunikationsanlage 2 angeschlossen ist, wie das Endgerät 21, über welches das Leistungsmerkmal aktiviert werden soll. Ist dies der Fall, so leitet die Erkennungsvorrichtung 4 die Eingaben innerhalb der Telekommunikationsanlage 2 entsprechend an eine - nicht dargestellte - Steuerung der Kommunikationsanlage 2 weiter, welche das Leistungsmerkmal in der Kommunikationsanlage 2 aktiviert bzw. deaktiviert.

Der Fall, daß das Leistungsmerkmal für ein Endgerät 31 aktiviert werden soll, das an einer der weiteren Kommunikationsanlagen 3a,...,3c angeschlossen ist, wird ebenfalls von der Erkennungseinrichtung 4 erkannt. Daraufhin werden dementsprechende Steuerinformationen zu der entsprechenden weiteren Kommunikationsanlage 3a,...,3c - im vorliegenden Ausführungsbeispiel an die weitere Kommunikationsanlage 3a - über das Kommunikationsnetz 1 versendet. Das gewählte Leistungsmerkmal wird daraufhin durch die entsprechende weitere Kommunikationsanlage 3a, ..., 3c aktiviert bzw. deaktiviert.

Zum Erkennen, in welcher Telekommunikationsanlage 2, 3a...3c das Leistungsmerkmal aktiviert bzw. deaktiviert werden soll, greift die Erkennungseinrichtung 4 auf eine Speichervorrichtung 5 zu. In dieser Speichervorrichtung 5 sind permanent Daten abgespeichert, die Informationen über die Rufnummern der an den jeweiligen Kommunikationsanlagen 2, 3a...3c angeschlossenen Endgeräten 21, 31 und die den Rufnummern aufgrund der Zugehörigkeit zu einer Kommunikationsanlage 2, 3a, ... 3c zugeordneten kommunikationsanlagen-spezifischen Kennungen umfassen.

Die Erkennungseinrichtung 4 fügt zum Versenden der Steuerinformationen zum Aktivieren bzw. Deaktivieren von Leistungsmerkmalen an eine der weiteren Kommunikationsanlagen 3a,...,3c die Kennung zu den Eingaben hinzu, und versendet diese Daten über das Netzwerk an die jeweilige Kommunikationsanlage, 3a ..., 3c.

In Fällen, in denen eine Vernetzung der Kommunikationsanlagen 2, 3a,...,3b und des zentralen Servers 6 untereinander über ein Rechnernetz, z.B. ein lokales Netzwerk LAN, erfolgt, wird für Adressierung der entsprechenden weiteren Kommunikationsanlage 3a mittels der Kennung eine der weiteren Kommunikationsanlage 3a - bzw. der den Anschluß der weiteren Kommunikationsanlage 3a an das Rechnernetz realisierenden (nicht dargestellten) Anschlußbaugruppe - im Kommunikationsnetz 1 zugeordneten IP-Adresse ermittelt und die Steuerinformationen mittels dieser IP-Adresse an die weitere Kommunikationsanlage 3a übermittelt.

Die Steuerinformationen werden dabei über das IP-Protokoll getunnelt über das Rechnernetz übertragen. Die Steuerinformationen basieren üblicherweise auf einem kommunikationsanlagen-spezifischen, auf einem zeitschlitz-orientierten Übertragungsprotokoll basierenden Vernetzungsprotokoll, wobei die Steuerinformationen für die Vernetzung der Kommunikationsanlagen 2, 3a,...,3c in IP-Meldungen verpackt und über das Netzwerk an die jeweilige Kommunikationsanlage 2, 3a, ..., 3c übermittelt werden.

## Patentansprüche

1. Kommunikationsanlage (2) mit daran angeschlossenen Endgeräten (21, 31),
wobei die Kommunikationsanlage (2) über ein Netzwerk mit weiteren Kommunikationsanlagen (3a, ..., 3c) verbunden ist,
wobei ausgehend von einem Endgerät (21, 31) mittels spezifischer Eingaben Leistungsmerkmale in einer der Kommunikationsanlagen (2, 3a...3c) aktivierbar bzw. deaktivierbar sind,
**gekennzeichnet durch**
eine Erkennungseinrichtung (4), die anhand der Eingaben automatisch erkennt, in welcher der Kommunikationsanlagen (2, 3a,...,3c) das jeweilige Leistungsmerkmal zu aktivieren bzw. zu deaktivieren ist und entsprechende Steuerinformationen automatisch an die entsprechende Kommunikationsanlage (2, 3a, ..., 3c) versendet.

2. Kommunikationsanlage (2) gemäß Anspruch 1,
**dadurch gekennzeichnet,**
**daß** ein Leistungsmerkmal durch Eingabe einer leistungsmerkmals-spezifischen Servicekennzahl und einer Endgeräte-Rufnummer desjenigen Endgerätes (21, 31), für welches das Leitungsmerkmal aktiviert bzw. deaktiviert werden soll, aktivierbar bzw. deaktivierbar ist.

3. Kommunikationsanlage (2) gemäß Anspruch 1 oder 2,
**dadurch gekennzeichnet,**
**daß** die Erkennungseinrichtung (4) automatisch eine Kennung derjenigen Kommunikationsanlage (2, 3a, ..., 3c), in der das Leistungsmerkmal aktiviert bzw. deaktiviert werden soll, ermittelt und mittels der ermittelten Kennung die entsprechenden Steuerinformationen über das Netzwerk versendet.

4. Kommunikationsanlage (2) gemäß Anspruch 2 oder 3, **gekennzeichnet durch**
eine Speichervorrichtung (5) zum Speichern der Rufnummern der an den Kommunikationsanlagen (2, 3a, ..., 3c) angeschlossenen Endgeräte (21, 31) und zugeordnet zu den Rufnummern eine Kennung derjenigen Kommunikationsanlage (2, 3a, ..., 3c), an die das jeweilige Endgerät (21, 31) angeschlossen ist.

5. Kommunikationsanlage (2) nach einem der vorhergehenden Ansprüche,
**dadurch gekennzeichnet,**
**daß** das Netzwerk ein IP-orientiertes Netzwerk ist.

6. Kommunikationsanlage (2) nach Anspruch 5,
**dadurch gekennzeichnet,**
**daß** anhand der Kennung eine IP-Adresse (Internet Protocol) für die Übermittlung der Steuerinformationen über das Netzwerk ermittelbar ist.

7. Verfahren zum Aktivieren bzw. Deaktivieren von Leistungsmerkmalen in einer Kommunikationsanlage (2), wobei die Kommunikationsanlage (2) über ein Netzwerk mit weiteren Kommunikationsanlagen (2, 3a,...,3c) verbunden ist und an den Kommunikationsanlagen (2, 3a,...,3c) Endgeräte (21, 31) angeschlossen sind,
bei dem durch einen Teilnehmer ausgehend von einem Endgerät (21, 31) mittels spezifischer Eingaben Leistungsmerkmale in einer der Kommunikationsanlagen(2, 3a,...,3c) aktivierbar bzw. deaktivierbar sind,
**dadurch gekennzeichnet,**
**daß** anhand der vorgenommenen Eingabe automatisch erkannt wird, in welcher der Kommunikationsanlagen (2, 3a...3c) das jeweilige Leistungsmerkmal aktiviert bzw. deaktiviert werden soll, und
**daß** entsprechende Steuerinformationen an die entsprechende Kommunikationsanlage (2, 3a,...,3c) übermittelt werden.

8. Verfahren nach Anspruch 7,
**dadurch gekennzeichnet,**
**daß** ein Leistungsmerkmal durch Eingabe einer leistungsmerkmals-spezifischen Servicekennzahl und einer Endgerät-Rufnummer desjenigen Endgerätes (21, 31), für welches das Leitungsmerkmal aktiviert bzw. deaktiviert werden soll, aktiviert bzw. deaktiviert wird.

9. Verfahren nach Anspruch 7 oder 8,
**gekennzeichnet durch**
daß in einer Speichereinrichtung (5) der Kommunikationsanlage (2) die Rufnummern der an den Kommunikationsanlagen (2, 3a,...,3c) angeschlossenen Endgeräte (21, 31) und den Rufnummern zugeordnet Kennungen derjenigen Kommunikationsanlage (2, 3a,...,3c), an welche ein Endgerät (21, 31) angeschlossen ist, gespeichert werden.

10. Verfahren nach einem der Ansprüche 7 bis 9, **gekennzeichnet durch**
daß eine Datenübermittlung über das Netzwerk gemäß dem IP-Protokoll (Internet Protocol) realisiert wird.

11. Verfahren nach Anspruch 10,
**gekennzeichnet durch,**
daß die Steuerinformationen in IP-Meldungen eingefügt und über das Netzwerk übermittelt werden.
